# EUROPEAN PATENT SPECIFICATION

(11) **EP 3 932 740 B1**
(45) Date of publication and mention of the grant of the patent: **19.10.2022**
(21) Application number: 20183392.8
(22) Date of filing: 01.07.2020
(51) Int. Cl.: B60R 1/00, B60K 37/02

(54) **ELECTRONIC MIRROR SYSTEM FOR USE IN A VEHICLE AND VEHICLE COMPRISING SAME**
ELEKTRONISCHES SPIEGELSYSTEM ZUR VERWENDUNG IN EINEM FAHRZEUG UND FAHRZEUG DAMIT
SYSTÈME DE RÉTROVISEUR ÉLECTRONIQUE DESTINÉ À ÊTRE UTILISÉ DANS UN VÉHICULE ET VÉHICULE LE COMPRENANT

(43) Date of publication of application: 05.01.2022
(73) Proprietor: Alpine Electronics, Inc., Tokyo 145-0067 (JP)
(72) Inventor: Galos, Andreas, 70771 Leinfelden-Echterdingen (DE)
(74) Representative: Schmitt-Nilson Schraud Waibel Wohlfrom Patentanwälte Partnerschaft mbB

(56) References cited:
- WO-A1-2005/080135
- US-A1- 2014 085 471
- US-A1- 2016 214 536

## Description

The present invention relates to an electronic mirror system for use in a vehicle, and a dashboard and vehicle comprising such electronic mirror system.

In order to replace or complement a conventional side view or rear view mirror used in a vehicle, an electronic mirror ("e-mirror") technology has recently been developed. To implement the e-mirror technology, typically one or more cameras are mounted on a side part or a rear part of the vehicle to take side rear view or rear view images of the vehicle. The images taken by the camera or cameras, which are representing a respective scene behind the vehicle, are displayed on a respective display provided inside of the vehicle, e.g. in a central position of the cabin above the dashboard or on a left and right side of the driver, respectively, to enable the driver to see the rearward outside of the vehicle through the respective display.

Such electronic or e-mirror systems are typically provided to replace traditional glass-type rear-view mirrors. Such e-mirror systems, however, have a principal disadvantage of an eye accommodation or focussing distance which is shorter than in traditional mirrors. This results from providing the respective electronic display on each side of the driver whose eyes have to accommodate for the short distance to the display when focussing an object on the display screen, whereas an object observed in a traditional glass-type rear-view mirror has longer accommodation distance for the driver's eyes when focussing on the object reflected in the mirror. Therefore, besides the advantages of an electronic mirror system in multiple respects, using an electronic mirror system may put the driver's eyes under stress, which may compromise driving safety. Document WO 2005/080135 A1 discloses an electronic mirror system according to the preamble of claim 1.

It is thus an object of the present invention to provide an electronic mirror system for a vehicle which is capable to reduce the driver's efforts when observing a respective rear view image and increase driving safety.

The invention relates to an electronic mirror system for use in a vehicle according to the appended claims. The invention further relates to a dashboard and a vehicle comprising such electronic mirror system. Embodiments of the invention are evident from the dependent claims.

According to an aspect, there is provided an electronic mirror system for use in a vehicle for displaying rear view images representing a respective scene behind the vehicle, wherein the system comprises a housing, a first image display device for displaying a right rear view image of the vehicle captured by at least one camera, a first see-through element configured to display the right rear view image to a driver of the vehicle, a first optical folded pathway transmitting light from the first image display device to the first see-through element, a second image display device for displaying a left rear view image of the vehicle captured by at least one camera, a second see-through element configured to display the left rear view image to the driver of the vehicle, and a second optical folded pathway transmitting light from the second image display device to the second see-through element. The first and second optical folded pathways are arranged in an interleaving arrangement in a common optical folding space of the housing.

With the invention, it is thus possible to reduce the driver's efforts to observe a respective rear view image and, thus, to increase driving safety, since the driver's efforts of eye accommodation and focussing on a displayed object may be reduced. Specifically, to avoid short-distance eye accommodation, the concept of the present invention uses optical folding, e.g. by employing one or more reflective elements, to enlarge the perceived distance to the display. At the same time, to reduce the packaging space needed for optical folding by the use of multiple optical elements, such as mirrors, the first and second optical folded pathways are arranged in an interleaving arrangement in a common optical folding space of the housing. Consequently, the optical pathways of the left and right rear view images (e-mirrors) are arranged inside a same packaging space, so that it is not necessary to place both systems in a respective separate housing on the left and right side of the driver which would consume a considerable packaging space in the dashboard.

According to an embodiment, the electronic mirror system is configured to be arranged in a dashboard of the vehicle such that at least one respective vector component of the first and second optical folded pathways is arranged in a horizontal extension of the dashboard. According to such arrangement, an efficient packaging of such e-mirror system can be employed since, for example, a flat horizontal packaging space in the dashboard can be used, which is more efficient than using, e.g., two separate vertically arranged packaging spaces for the left and right e-mirrors, respectively.

According to an embodiment, the electronic mirror system is configured to be arranged in relation to an instrument cluster of the vehicle such that at least part of the first and second optical folded pathways are arranged behind the instrument cluster and the first and second see-through elements are arranged at opposing left and right side portions of the instrument cluster from the driver's perspective. The invention thus enables to use as the packaging space for the optical folding the flat horizontal space behind the instrument cluster, which is a space typically unused in most vehicles.

According to an embodiment, the first and second see-through elements and the first and second image display devices are arranged within the housing. With such arrangement, an e-mirror system in a compact housing may be provided which can be easily mounted in a dashboard of the vehicle.

According to an embodiment, the first image display device is arranged at a first side of the housing, and the second image display device is arranged at a second side of the housing which is opposite the first side of the housing. Particularly, the first side of the housing is arranged at a left side of the driver, and the second side of the housing is arranged at a right side of the driver. Such arrangement may achieve respective elongated optical pathways which reduce eye accommodation effort for the driver when viewing the respective rear view image.

According to an embodiment, a respective extension of the first and second optical folded pathways is longer than a horizontal or vertical extension of the housing. Such arrangement may achieve respective elongated optical pathways which reduce eye accommodation effort for the driver when viewing the respective rear view image as compared to straight (unfolded) optical pathways along a horizontal or vertical extension of the housing.

According to an embodiment, the first optical folded pathway comprises at least one first reflective element positioned to receive and reflect light from the first image display device, and the second optical folded pathway comprises at least one second reflective element positioned to receive and reflect light from the second image display device. Advantageously, the at least one first and second reflective elements are positioned at opposing sides of the housing.

According to an embodiment, the at least one first reflective element is configured to be positioned at a right side of the driver, and the at least one second reflective element is configured to be positioned at a left side of the driver. Preferably, the first image display device is configured to be positioned at a left side of the driver, while the second image display device is configured to be positioned at a right side of the driver. Such arrangement may achieve respective elongated optical pathways while keeping packaging space quite low.

According to an embodiment, at least one of the first and second see-through elements comprises a see-through opening or an element comprising a transparent or semi-transparent material. For example, the see-through opening or element comprising a transparent or semi-transparent material may be placed in a respective opening of the dashboard for the driver to view the respective rear view image through the respective optical folded pathway.

According to an embodiment of the dashboard according to aspects of the invention, the electronic mirror system is arranged in the dashboard such that at least one respective vector component of the first and second optical folded pathways is arranged in a horizontal extension of the dashboard. Advantageously, a respective main vector component of the first and second optical folded pathways is arranged in a horizontal extension of the dashboard. According to such arrangement, an efficient packaging of the e-mirror system in the vehicle's dashboard can be achieved since, for example, a flat horizontal packaging space in the dashboard can be used.

Advantageously, the electronic mirror system is arranged such that at least a respective portion of the first and second optical folded pathways is arranged behind an instrument cluster of the vehicle in the dashboard.

The present invention can be used, in principle, in any type of vehicle, preferably in a car (automobile) of common type. Advantageously, the first and second see-through elements are placed on right and left hand sides of an instrument cluster and steering wheel of the vehicle, so that the driver may view at one glance, and without great accommodation effort, the respective rear views of the vehicle.

Aspects of the invention and embodiments will now be described with reference to the following Figures, in which
- Fig. 1: depicts a schematic view of a vehicle and its inside passenger space including an electronic mirror system according to an embodiment of the invention,
- Fig. 2: is a schematic front view of an electronic mirror system according to an embodiment of the invention from a driver's perspective,
- Fig. 3: is a more detailed schematic view of an electronic mirror system according to an embodiment of the invention in a cross-sectional view from the top,
- Fig. 4: is a schematic view of an electronic mirror system according to Fig. 3 showing respective vector components of the first and second optical folded pathways in more detail.

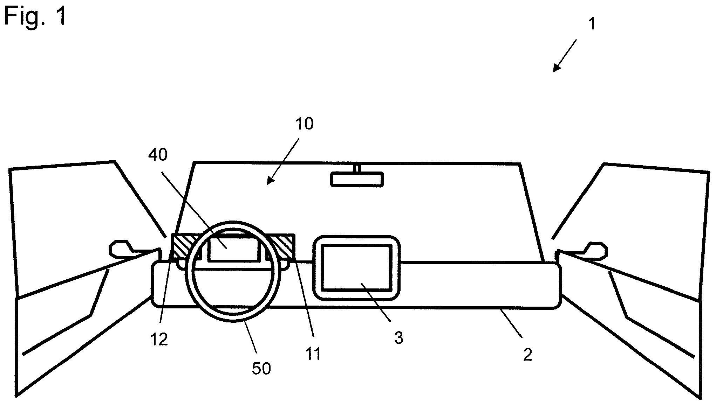

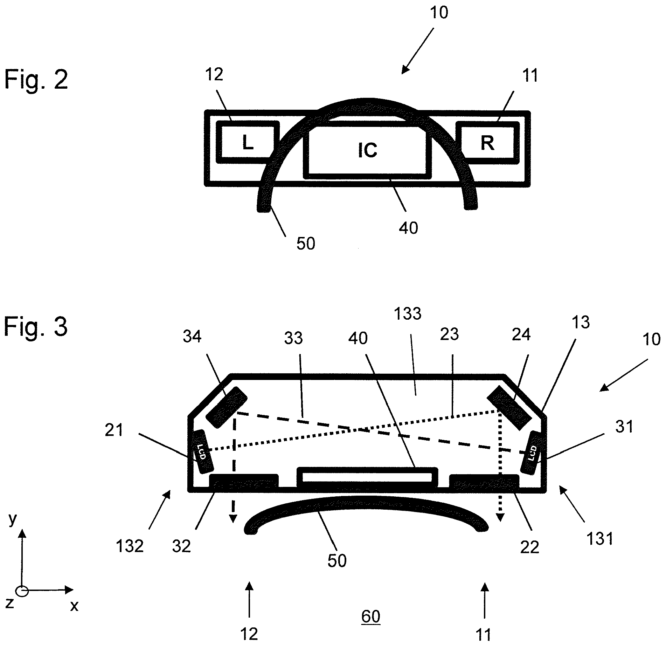

Fig. 1 depicts a schematic view of a vehicle 1 and an inside passenger space thereof including an electronic mirror system 10 according to an embodiment of the invention. The vehicle 1 comprises a dashboard 2 which may include a central head unit 3 as known in the art for providing, e.g., a human machine interface for operating the vehicle and/or navigation functions. The vehicle 1 further includes an electronic mirror system 10 according to an embodiment of the invention. As shown in greater detail in Fig. 2, showing the driver's view, the e-mirror system 10 comprises, in an exemplary arrangement, a right display element 11 for displaying a right rear view image R and a left display element 12 for displaying a left rear view image L to a driver, as explained in more detail below, which are arranged at opposing sides of a central instrument cluster 40 of the vehicle arranged behind a steering wheel 50. The instrument cluster (IC) 40 provides or incorporates an instrument panel with analog instruments and/or digital instrument displays (not shown) providing information to the driver for operating the vehicle, such as vehicle speed, motor revolution speed (rpm), and/or oil temperature, etc., as commonly known in the art.

The e-mirror system 10 further comprises, or is coupled with, one or more cameras (not shown), such as vehicle cameras, e.g. mounted on both sides of the vehicle 1, e.g. at the rear side of the vehicle. The camera or each of the cameras captures respective images of a side rear view of the vehicle 1, thus generating respective right and left rear view images representing a respective scene behind the vehicle 1. Such captured rear view images are preferably sent to a control unit, such as implemented in the head unit 3, which provides the respective images to a first image display device, such as a LCD display unit as known in the art, for displaying the captured right rear view image, and a second image display device, such as a LCD display unit, for displaying the captured left rear view image. In principle, the first and second image display devices can be any image displaying means which displays a respective rear view image captured by at least one camera for displaying to the driver of the vehicle 1. The control unit which is, for example, a microprocessor or a central processing unit (CPU) may also perform an image processing on the captured rear view images, for example to reduce distortion and/or to increase contrast, etc., before transmitting the image-processed captured images to the first and second image display devices. With the so-called electronic rear view images, the driver of the vehicle 1 can be well informed of situations happening outside the vehicle 1, especially in a blind spot area of both sides of the vehicle which would not be possible with a traditional glass-type mirror rear view system.

When image display devices, e.g. LCD displays, for displaying such rear view images are mounted on the dashboard for viewing by the driver, they have a principal disadvantage that they require short-distance eye accommodation by the driver with shorter distances than in traditional glass-type mirrors, which is due to the short distance between the driver's eyes and the image displayed on the screen of the image display device mounted in the dashboard. Therefore, such e-mirror systems put the driver's eyes under stress when focussing on an object displayed on the screen of the image display device.

According to aspects of the present invention, to avoid such short-distance eye accommodation and focussing, the employed e-mirror system uses optical folding, such as by using multiple inner reflective elements (e.g., mirrors), to enlarge the perceived distance to the display. Typically, an optical system, which uses optical folding, is an optical system in which a transmitted light beam is bent in a way to make the optical pathway of the light beam longer than the size of the system (e.g. housing). That is, in such optical system, the optical pathway is folded and thereby extended between the image source (here: the first and second image display devices) and the driver's eyes receiving the image light. Optical folding, which is a term known in the art, typically uses reflective elements, such as mirrors, which fold the light beam in multiple directions for beam extension.

Fig. 3 depicts a more detailed schematic view of an electronic mirror system according to an embodiment of the invention, in which the e-mirror system is shown in a cross-sectional view from the top. The e-mirror system 10 is arranged in relation to a three-dimensional coordinate system, with the x-direction being a horizontal extension of the dashboard 2, the y-direction being a depth extension of the dashboard 2, and the z-direction being a vertical extension of the dashboard 2, when mounted in the vehicle 1.

The electronic mirror system 10 comprises a housing 13, e.g. of metal or plastic material, which is in the present embodiment a housing for accommodating the vehicle's instrument cluster 40 (cluster housing) and is placed behind the steering wheel 50. In the present embodiment, the housing 13 includes an instrument cluster 40, for example, as described above with reference to Figures 1 and 2. As more detailed in Fig. 3, the right display element 11 comprises a first see-through element 22, and the left display element 12 comprises a second see-through element 32. For example, one or both of the first and second see-through elements 22 and 32 comprises a see-through opening or an element comprising a transparent or semi-transparent material covering a see-through opening, such as natural glass or acrylic glass. In principle, the see-through opening may be open or may be at least partially closed by any suitable transparent or semi-transparent material.

The e-mirror system 10 further comprises the first image display device 21 which displays the right rear view image R of the vehicle 1. More specifically, the image display device 21 is a device which displays a source image to be displayed to the driver and which is indicative of a right rear view image captured by an associated camera. The source image may be the same or may be different from the captured image, e.g. the captured image may be image-processed by a processing device, e.g. for reducing distortion or the like, before being displayed as a source image to the driver.

The first see-through element 22, e.g. an opening in the dashboard 2 and housing 13 covered by transparent glass, is configured to display the right rear view image R displayed by the first image display device 21 to the driver 60. For displaying the right rear view image R, a first optical folded pathway 23 transmits light from the first image display device 21 to the first see-through element 22. For example, the first optical folded pathway 23 comprises at least one first reflective element 24, such as a mirror, positioned to receive and reflect light emitted from the first image display device 21, which may be a LCD display or other suitable display device. In the present embodiment, the first reflective element 24 is positioned at a right side of the driver 60 for displaying the right rear view image R to the driver. The optical folded pathway depicted in Fig. 3 is only an example. It may comprise more than one reflective element for multiple optical folding, e.g. if the optical pathway shall be extended more than in the example of Fig. 3.

Similarly as for displaying the right rear view image R, the e-mirror system 10 comprises the second image display device 31, e.g. a LCD display device, for displaying the left rear view image L. To this end, a second see-through element 32, e.g. an opening in the dashboard 2 and housing 13 covered by transparent glass, is configured to display the left rear view image L to the driver 60 and receives light from a second optical folded pathway 33 which transmits light from the second image display device 31 to the second see-through element 32. Analogous to the first image display device 21, the second image display device 31 is a device which displays a source image to be displayed to the driver and which is indicative of a left rear view image captured by an associated camera. The source image may be the same or may be different from the captured image. Preferably, the first and second see-through elements 22, 32 and/or the first and second image display devices 21, 31 are arranged within the housing 13, but may also be placed outside the housing 13.

For example, the second optical folded pathway 33 comprises at least one second reflective element 34, such as a mirror, positioned to receive and reflect light emitted from the second image display device 31, which may be a LCD display or other suitable display device. In the present embodiment, the second reflective element 34 is positioned at a left side of the driver 60 for displaying the left rear view image L to the driver. In the present configuration, advantageously, the first and second reflective elements 24, 34 are positioned at opposing sides of the housing 13.

To extend the optical folded pathways to quite an extent, it is advantageous that the first image display device 21 is arranged at a first side 132 of the housing 13 opposite to a second side 131 of the housing at which the second image display device 31 is arranged. The first side 132 of the housing is arranged at a left side of the driver 60, whereas the second side 131 of the housing is arranged at a right side of the driver 60. Preferably, to reduce eye accommodation effort for the driver, a respective extension of the first and second optical folded pathways 23, 33 is longer than a horizontal or vertical extension of the housing 13. In this way, by using such optical folding, the eye accommodation effort for the driver may be reduced while not increasing the packaging space for the e-mirror system 10 in the dashboard 2.

With an arrangement as shown in Fig. 3, the e-mirror system 10 avoids the disadvantage of eye accommodation for a short distance to the respective display elements 11, 12, since the driver's eyes will have to focus on objects shown on the LCD displays 21 and 31, which are farer away than any LCD displays placed in dashboard openings next to the driver. In other words, the perceived distance to the displays 21 and 31 is enlarged through the optical folding. Therefore, the e-mirror system 10 reduces the driver's efforts for short-distance eye accommodation when the driver changes his or her gaze from the street in front of the driver to the rear view image displays.

At the same time, the present invention advantageously avoids a huge packaging space needed for displaying the left and right rear view images, as would be the case when using two folding spaces for the left and right rear view images provided in separate housings, which is hardly feasible because of limited space in a commonly employed vehicle dashboard. In particular, as shown in Fig. 3 in one exemplary embodiment, the present invention in combination with optical folding provides that the first and second optical folded pathways 23, 33 are arranged in an interleaving arrangement in a common optical folding space 133 of the housing 13. The invention discovered that, since different rays of multi-spectral light do not substantially interfere with each other, it is possible to use the same space for crossing paths of optical folding, i.e. in the present case use the same optical folding space 133 of the housing 13 for the first and second optical folded pathways 23, 33 which are configured in an interleaving arrangement. The present invention thus provides a good solution for having two e-mirror displays with long viewing or accommodation distance inside a realistic vehicle package, e.g. provided by housing 13.

Generally, the first and second optical folded pathways 23, 33 arranged in an interleaving arrangement in a common optical folding space shall mean, for example, that the optical folded pathways are arranged within a same optical folding space such that they cross or intersect each other, or are in an oblique or in skewed arrangement with respect to each other so that they are at least partially overlapping along a horizontal extension of the dashboard. The first and second optical folded pathways are not parallel to each other or in separate optical folding spaces structurally separate from each other.

The present invention further discovered that it would be advantageous to place at least parts of such e-mirror system 10, in particular parts of the optical folded pathways which need space for increasing the accommodation distance, inside a packaging space arranged flat behind the instrument cluster, such as instrument cluster 40 shown in Figures 1 to 3. Such flat horizontal space behind the instrument cluster is a space typically unused in vehicles.

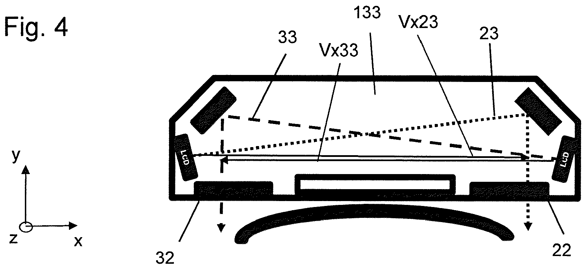

To this end, according to an embodiment of the invention and as shown in greater detail in Fig. 4, the electronic mirror system 10 is configured to be arranged in the dashboard 2 such that at least one vector component Vx23 of the first optical folded pathway 23 and at least one vector component Vx33 of the second optical folded pathway 33 are respectively arranged in the horizontal extension x of the dashboard 2. In other words, the optical folded pathways 23, 33 are arranged such that at least a part of the pathways is arranged horizontally in the dashboard, so that the flat horizontal space behind the instrument cluster 40 can be used for the packaging of the e-mirror system 10. In this way, a respective portion of the first and second optical folded pathways 23, 33 is arranged behind the instrument cluster 40, as shown in Fig. 3, which saves packaging space for the e-mirror system while preserving the advantages of reduced accommodation efforts for the driver's eyes, as detailed above.

In addition to the horizontal direction x, vector components of the optical folded pathways 23, 33 may also be arranged in the y- and/or z-direction, so that the pathways 23, 33 are arranged three-dimensionally in relation to the x-y-z coordinate system within the optical folding space 133, depending on the particular circumstances. For example, in certain embodiments, it may be advantageous to place the LCD displays 21, 31 at a vertical position (z-direction) which is different from a vertical position of the reflecting elements 24, 34. Further, as shown in Figures 3 and 4, the pathways 23, 33 also have a respective vector component in y-direction, i.e. depth direction (not explicitly designated). To make use of the flat horizontal space behind the instrument cluster 40, as shown in Fig. 3 and 4, the optical folded pathways 23, 33 are preferably arranged such that a substantial part of the pathways is arranged horizontally in the x-direction, so that a respective main vector component Vx23, Vx33 of the first and second optical folded pathways 23, 33 is arranged in the horizontal extension x, and only smaller vector components are arranged in y- and/or z-direction. In the present case, main vector component shall designate a vector component of the respective pathway which is larger than the other vector components of the respective pathway in three-dimensional space. In this way, substantial parts of the e-mirror system 10 may be placed in a small common horizontal packaging space behind the instrument cluster, which provides an efficient solution for implementing an e-mirror system according to aspects of the invention.

## Claims

1. An electronic mirror system (10) for use in a vehicle (1) for displaying rear view images representing a respective scene behind the vehicle (1), the system comprising:
a housing (13),
a first image display device (21) for displaying a right rear view image (R) of the vehicle captured by at least one camera,
a first see-through element (22) configured to display the right rear view image (R) to a driver (60) of the vehicle,
a first optical folded pathway (23) transmitting light from the first image display device (21) to the first see-through element (22),
a second image display device (31) for displaying a left rear view image (L) of the vehicle captured by at least one camera,
a second see-through element (32) configured to display the left rear view image (L) to the driver of the vehicle,
a second optical folded pathway (33) transmitting light from the second image display device (31) to the second see-through element (32),
**characterised in that**
the first and second optical folded pathways (23, 33) are arranged in an interleaving arrangement in a common optical folding space (133) of the housing (13).

2. The image display system according to claim 1, wherein the electronic mirror system (10) is configured to be arranged in a dashboard (2) of the vehicle (1) such that at least one respective vector component (Vx23, Vx33) of the first and second optical folded pathways (23, 33) is arranged in a horizontal extension (x) of the dashboard (2).

3. The electronic mirror system according to claim 1 or 2, wherein the electronic mirror system (10) is configured to be arranged in relation to an instrument cluster (40) of the vehicle (1) such that at least part of the first and second optical folded pathways (23, 33) are arranged behind the instrument cluster (40) and the first and second see-through elements (22, 32) are arranged at opposing left and right side portions of the instrument cluster (40).

4. The electronic mirror system according to one of claims 1 to 3, wherein the first and second see-through elements (22, 32) and the first and second image display devices (21, 31) are arranged within the housing (13).

5. The electronic mirror system according to one of claims 1 to 4, wherein the first image display device (21) is arranged at a first side (132) of the housing, and the second image display device (31) is arranged at a second side (131) of the housing which is opposite the first side (132) of the housing.

6. The electronic mirror system according to claim 5, wherein the first side of the housing (132) is arranged at a left side of the driver (60), and the second side of the housing (131) is arranged at a right side of the driver (60).

7. The electronic mirror system according to one of claims 1 to 6, wherein a respective extension of the first and second optical folded pathways (23, 33) is longer than a horizontal or vertical extension of the housing (13).

8. The electronic mirror system according to one of claims 1 to 7, wherein
the first optical folded pathway (23) comprises at least one first reflective element (24) positioned to receive and reflect light from the first image display device (21),
the second optical folded pathway (33) comprises at least one second reflective element (34) positioned to receive and reflect light from the second image display device (31).

9. The electronic mirror system according to claim 8, wherein the at least one first and second reflective elements (24, 34) are positioned at opposing sides of the housing (13).

10. The electronic mirror system according to claim 8 or 9, wherein
the at least one first reflective element (24) is positioned at a right side of the driver (60), and
the at least one second reflective element (34) is positioned at a left side of the driver (60).

11. The electronic mirror system according to one of claims 1 to 10, wherein at least one of the first and second see-through elements (22, 32) comprises a see-through opening or an element comprising a transparent or semi-transparent material.

12. A vehicle dashboard (2) comprising an electronic mirror system (10) according to one of the preceding claims, wherein the electronic mirror system (10) is arranged in the dashboard (2) such that at least one respective vector component (Vx23, Vx33) of the first and second optical folded pathways (23, 33) is arranged in a horizontal extension (x) of the dashboard (2).

13. The vehicle dashboard according to claim 12, wherein a respective main vector component (Vx23, Vx33) of the first and second optical folded pathways (23, 33) is arranged in the horizontal extension (x) of the dashboard (2).

14. The vehicle dashboard according to claim 12 or 13, wherein the electronic mirror system (10) is arranged such that at least a respective portion of the first and second optical folded pathways (23, 33) is arranged behind an instrument cluster (40) of the vehicle in the dashboard.

15. A vehicle (1) comprising an electronic mirror system (10) according to one of the claims 1 to 11, or a vehicle dashboard (2) according to one of claims 12 to 14.

## Patentansprüche

1. Elektronisches Spiegelsystem (10) zur Verwendung in einem Fahrzeug (1) zum Anzeigen von Rückansichtsbildern, die eine jeweilige Szene hinter dem Fahrzeug (1) darstellen, wobei das System Folgendes aufweist:
ein Gehäuse (13),
eine erste Bildanzeigevorrichtung (21) zum Anzeigen eines rechten Rückansichtsbilds (R) des Fahrzeugs, das von mindestens einer Kamera aufgenommen wird,
ein erstes Durchsichtelement (22), das dazu ausgebildet ist, einem Fahrer (60) des Fahrzeugs das rechte Rückansichtsbild (R) anzuzeigen,
einen ersten gefalteten Strahlengang (23), der Licht von der ersten Bildanzeigevorrichtung (21) zu dem ersten Durchsichtelement (22) überträgt,
eine zweite Bildanzeigevorrichtung (31) zum Anzeigen eines linken Rückansichtsbilds (L) des Fahrzeugs, das von mindestens einer Kamera aufgenommen wird,
ein zweites Durchsichtelement (32), das dazu ausgebildet ist, dem Fahrer des Fahrzeugs das linke Rückansichtsbild (L) anzuzeigen,
einen zweiten gefalteten Strahlengang (33), der Licht von der zweiten Bildanzeigevorrichtung (31) zu dem zweiten Durchsichtelement (32) überträgt,
**dadurch gekennzeichnet,**
**dass** der erste und der zweite gefaltete Strahlengang (23, 33) in einer ineinandergreifenden Anordnung in einem gemeinsamen optischen Faltungsraum (133) des Gehäuses (13) angeordnet sind.

2. Elektronisches Spiegelsystem nach Anspruch 1,
wobei das elektronische Spiegelsystem (10) dazu ausgebildet ist, in einem Armaturenbrett (2) des Fahrzeugs (1) derart angeordnet zu werden, dass zumindest eine jeweilige Vektorkomponente (Vx23, Vx33) des ersten und des zweiten gefalteten Strahlengangs (23, 33) in einer horizontalen Erstreckung (x) des Armaturenbretts (2) angeordnet ist.

3. Elektronisches Spiegelsystem nach Anspruch 1 oder 2,
wobei das elektronische Spiegelsystem (10) dazu ausgebildet ist, in Relation zu einem Kombiinstrument (40) des Fahrzeugs (1) derart angeordnet zu werden, dass zumindest ein Teil des ersten und des zweiten gefalteten Strahlengangs (23, 33) hinter dem Kombiinstrument (40) angeordnet ist und das erste und das zweite Durchsichtelement (22, 32) an gegenüberliegenden linken und rechten Seitenbereichen des Kombiinstruments (40) angeordnet sind.

4. Elektronisches Spiegelsystem nach einem der Ansprüche 1 bis 3, wobei das erste und das zweite Durchsichtelement (22, 32) und die erste und die zweite Bildanzeigevorrichtung (21, 31) innerhalb des Gehäuses (13) angeordnet sind.

5. Elektronisches Spiegelsystem nach einem der Ansprüche 1 bis 4, wobei die erste Bildanzeigevorrichtung (21) auf einer ersten Seite (132) des Gehäuses angeordnet ist und die zweite Bildanzeigevorrichtung (31) auf einer zweiten Seite (131) des Gehäuses angeordnet ist, die der ersten Seite (132) des Gehäuses gegenüberliegt.

6. Elektronisches Spiegelsystem nach Anspruch 5,
wobei die erste Seite des Gehäuses (132) auf einer linken Seite von dem Fahrer (60) angeordnet ist und die zweite Seite des Gehäuses (131) auf einer rechten Seite von dem Fahrer (60) angeordnet ist.

7. Elektronisches Spiegelsystem nach einem der Ansprüche 1 bis 6, wobei eine jeweilige Erstreckung des ersten und des zweiten gefalteten Strahlengangs (23, 33) länger ist als eine horizontale oder vertikale Erstreckung des Gehäuses (13).

8. Elektronisches Spiegelsystem nach einem der Ansprüche 1 bis 7, wobei der erste gefaltete Strahlengang (23) mindestens ein erstes reflektierendes Element (24) aufweist, das zum Empfangen und Reflektieren von Licht von der ersten Bildanzeigevorrichtung (21) positioniert ist,
wobei der zweite gefaltete Strahlengang (33) mindestens ein zweites reflektierendes Element (34) aufweist, das zum Empfangen und Reflektieren von Licht von der zweiten Bildanzeigevorrichtung (31) positioniert ist.

9. Elektronisches Spiegelsystem nach Anspruch 8,
wobei das mindestens eine erste und zweite reflektierende Element (24, 34) auf gegenüberliegenden Seiten des Gehäuses (13) positioniert sind.

10. Elektronisches Spiegelsystem nach Anspruch 8 oder 9,
wobei das mindestens eine erste reflektierende Element (24) auf einer rechten Seite von dem Fahrer (60) positioniert ist und das mindestens eine zweite reflektierende Element (34) auf einer linken Seite von dem Fahrer (60) positioniert ist.

11. Elektronisches Spiegelsystem nach einem der Ansprüche 1 bis 10,
wobei mindestens eines von dem ersten und dem zweiten Durchsichtelement (22, 32) eine Durchsichtöffnung oder ein Element umfasst, das ein transparentes oder halbtransparentes Material aufweist.

12. Fahrzeug-Armaturenbrett (2) mit einem elektronischen Spiegelsystem (10) nach einem der vorhergehenden Ansprüche, wobei das elektronische Spiegelsystem (10) derart in dem Armaturenbrett (2) angeordnet ist, dass zumindest eine jeweilige Vektorkomponente (Vx23, Vx33 ) des ersten und zweiten gefalteten Strahlengangs (23, 33) in einer horizontalen Erstreckung (x) des Armaturenbretts (2) angeordnet ist.

13. Fahrzeug-Armaturenbrett nach Anspruch 12,
wobei eine jeweilige Hauptvektorkomponente (Vx23, Vx33) des ersten und des zweiten gefalteten Strahlengangs (23, 33) in der horizontalen Erstreckung (x) des Armaturenbretts (2) angeordnet ist.

14. Fahrzeug-Armaturenbrett nach Anspruch 12 oder 13,
wobei das elektronische Spiegelsystem (10) derart angeordnet ist, dass zumindest ein jeweiliger Bereich des ersten und des zweiten gefalteten Strahlengangs (23, 33) hinter einem Kombiinstrument (40) des Fahrzeug in dem Armaturenbrett angeordnet ist.

15. Fahrzeug (1) mit einem elektronischen Spiegelsystem (10) nach einem der Ansprüche 1 bis 11 oder einem Fahrzeug-Armaturenbrett (2) nach einem der Ansprüche 12 bis 14.

## Revendications

1. Système de miroir électronique (10) destiné à être utilisé dans un véhicule (1) pour afficher des images de vue arrière représentant une scène respective derrière le véhicule (1), le système comprenant :
un boîtier (13),
un premier dispositif d'affichage d'image (21) pour afficher une image de vue arrière droite (R) du véhicule capturée par au moins une caméra,
un premier élément transparent (22) configuré pour afficher l'image de vue arrière droite (R) à un conducteur (60) du véhicule,
un premier chemin optique plié (23) transmettant la lumière du premier dispositif d'affichage d'image (21) au premier élément transparent (22),
un deuxième dispositif d'affichage d'image (31) pour afficher une image de vue arrière gauche (L) du véhicule capturée par au moins une caméra,
un deuxième élément transparent (32) configuré pour afficher l'image de la vue arrière gauche (L) au conducteur du véhicule,
un deuxième chemin optique plié (33) transmettant la lumière du deuxième dispositif d'affichage d'image (31) au deuxième élément transparent (32),
**caractérisé en ce que**
les premier et deuxième chemins optiques pliés (23, 33) sont disposés selon un agencement d'entrelacement dans un espace de pliage optique commun (133) du boîtier (13).

2. Système d'affichage d'image selon la revendication 1, dans lequel le système de miroir électronique (10) est configuré pour être agencé dans un tableau de bord (2) du véhicule (1) de sorte qu'au moins une composante vectorielle respective (Vx23, Vx33) des premier et deuxième chemins optiques pliés (23, 33) est agencée dans une extension horizontale (x) du tableau de bord (2).

3. Système de rétroviseur électronique selon la revendication 1 ou 2, dans lequel le système de rétroviseur électronique (10) est configuré pour être agencé par rapport à un groupe d'instruments (40) du véhicule (1) de sorte qu'au moins une partie des premier et deuxième chemins optiques pliés (23, 33) est agencée derrière le groupe d'instruments (40) et les premier et deuxième éléments transparents (22, 32) sont agencés au niveau de parties latérales gauche et droite opposées du groupe d'instruments (40).

4. Système de rétroviseur électronique selon l'une des revendications 1 à 3, dans lequel les premier et deuxième éléments transparents (22, 32) et les premier et deuxième dispositifs d'affichage d'image (21, 31) sont disposés à l'intérieur du boîtier (13).

5. Système de miroir électronique selon l'une des revendications 1 à 4, dans lequel le premier dispositif d'affichage d'image (21) est disposé sur un premier côté (132) du boîtier, et le deuxième dispositif d'affichage d'image (31) est disposé sur un deuxième côté (131) du boîtier qui est opposé au premier côté (132) du boîtier.

6. Système de rétroviseur électronique selon la revendication 5, dans lequel le premier côté du boîtier (132) est disposé sur un côté gauche du conducteur (60), et le deuxième côté du boîtier (131) est disposé sur un côté droit du conducteur (60).

7. Système de rétroviseur électronique selon l'une des revendications 1 à 6, dans lequel une extension respective des premier et deuxième chemins optiques pliés (23, 33) est plus longue qu'une extension horizontale ou verticale du boîtier (13).

8. Système de miroir électronique selon l'une des revendications 1 à 7, dans lequel
le premier chemin optique plié (23) comprend au moins un premier élément réfléchissant (24) positionné pour recevoir et réfléchir la lumière provenant du premier dispositif d'affichage d'images (21),
le deuxième chemin optique plié (33) comprend au moins un deuxième élément réfléchissant (34) positionné pour recevoir et réfléchir la lumière provenant du deuxième dispositif d'affichage d'image (31).

9. Système de miroir électronique selon la revendication 8, dans lequel les au moins un premier et un deuxième éléments réfléchissants (24, 34) sont positionnés sur des côtés opposés du boîtier (13).

10. Système de miroir électronique selon la revendication 8 ou 9, dans lequel
l'au moins un premier élément réfléchissant (24) est positionné sur un côté droit du conducteur (60), et
l'au moins un deuxième élément réfléchissant (34) est positionné sur un côté gauche du conducteur (60).

11. Système de rétroviseur électronique selon l'une des revendications 1 à 10, dans lequel au moins l'un des premier et deuxième éléments transparents (22, 32) comprend une ouverture transparente ou un élément comprenant un matériau transparent ou semi-transparent.

12. Tableau de bord (2) de véhicule comprenant un système de rétroviseur électronique (10) selon l'une des revendications précédentes, dans lequel le système de rétroviseur électronique (10) est disposé dans le tableau de bord (2) de sorte qu'au moins une composante vectorielle respective (Vx23, Vx33) des premier et deuxième chemins optiques pliés (23, 33) est disposée dans une extension horizontale (x) du tableau de bord (2).

13. Tableau de bord de véhicule selon la revendication 12, dans lequel une composante vectorielle principale respective (Vx23, Vx33) des premier et deuxième chemins optiques pliés (23, 33) est disposée dans l'extension horizontale (x) du tableau de bord (2).

14. Tableau de bord de véhicule selon la revendication 12 ou 13, dans lequel le système de miroir électronique (10) est agencé de telle sorte qu'au moins une partie respective des premier et deuxième chemins optiques repliés (23, 33) est agencée derrière un groupe d'instruments (40) du véhicule dans le tableau de bord.

15. Véhicule (1) comprenant un système de rétroviseur électronique (10) selon l'une des revendications 1 à 11, ou un tableau de bord (2) de véhicule selon l'une des revendications 12 à 14.
